# EUROPÄISCHE PATENTANMELDUNG

(11) **EP 1 736 361 A1**
(43) Veröffentlichungstag der Anmeldung: **27.12.2006**
(21) Anmeldenummer: 06113741.0
(22) Anmeldetag: 10.05.2006
(51) Int. Cl.: B60R 1/00, B60R 1/10

(54) **Nachtsichtgerät für ein Kraftfahrzeug**

(30) Priorität: 21.06.2005 DE 102005028608
(71) Anmelder: ROBERT BOSCH GMBH, 70442 Stuttgart (DE)
(72) Erfinder: Borchers, Oliver, 70193, Stuttgart (DE)

(57) **Zusammenfassung**

Bei einem Nachtsichtgerät für ein Kraftfahrzeug mit einer infrarotempfindlichen Videokamera (1), einer Infrarot-Beleuchtungseinrichtung (3) und einem Bildwiedergabegerät (5) ist vorgesehen, dass in dem Signalweg zwischen der Videokamera (1) und dem Bildwiedergabegerät (5) eine Bildverarbeitungseinrichtung (4) zur Detektion von Kanten angeordnet ist.

## Beschreibung

Die Erfindung betrifft ein Nachtsichtgerät für ein Kraftfahrzeug mit einer infrarotempfindlichen Videokamera, einer Infrarot-Beleuchtungseinrichtung und einem Bildwiedergabegerät.

### Stand der Technik

Nachtsichtgeräte sollen die Sicht des Autofahrers bei Nacht durch Darstellung eines von einer Videokamera im Infrarotbereich aufgenommenen Bildes auf einem Bildwiedergabegerät (Display) verbessern. Als Infrarotbeleuchtungseinrichtungen können separate Infrarotscheinwerfer oder entsprechend ergänzte ansonsten übliche Scheinwerfer dienen. Insbesondere dadurch, dass durch die Verwendung von Infrarotstrahlung keine Blendprobleme vorliegen, können damit Objekte erkannt werden, welche außerhalb des von den Scheinwerfern beleuchteten Bereichs liegen.

### Vorteile der Erfindung

Aufgabe der vorliegenden Erfindung ist es, die Erkennbarkeit von auf dem Bildwiedergabegerät dargestellten Objekten zu verbessern. Diese Aufgabe wird bei dem erfindungsgemäßen Nachtsichtgerät dadurch gelöst, dass in dem Signalweg zwischen der Videokamera und dem Bildwiedergabegerät eine Bildverarbeitungseinrichtung zur Detektion von Kanten angeordnet ist. Die Hervorhebung kann dabei dadurch erfolgen, dass die Bildverarbeitungseinrichtung ferner zur Hervorhebung der detektierten Kanten im wiedergegebenen Bild ausgebildet ist.

Es ist zusätzlich oder alternativ zur hervorgehobenen Darstellung der Kanten möglich, dass die Bildverarbeitungseinrichtung ferner zur Hervorhebung der von den detektierten Kanten umgebenen Objekte im wiedergegebenen Bild ausgebildet ist. Vorzugsweise ist bei dem erfindungsgemäßen Nachtsichtgerät vorgesehen, dass die Bildverarbeitungseinrichtung in einem Mikrocomputer durch geeignete Programme gebildet ist.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung einer erfindungsgemäßen Einrichtung,
Fig. 2 ein erstes Ausführungsbeispiel für die Funktion der Bildverarbeitungseinrichtung und
Fig. 3 ein zweites Ausführungsbeispiel.

### Beschreibung der Ausführungsbeispiele

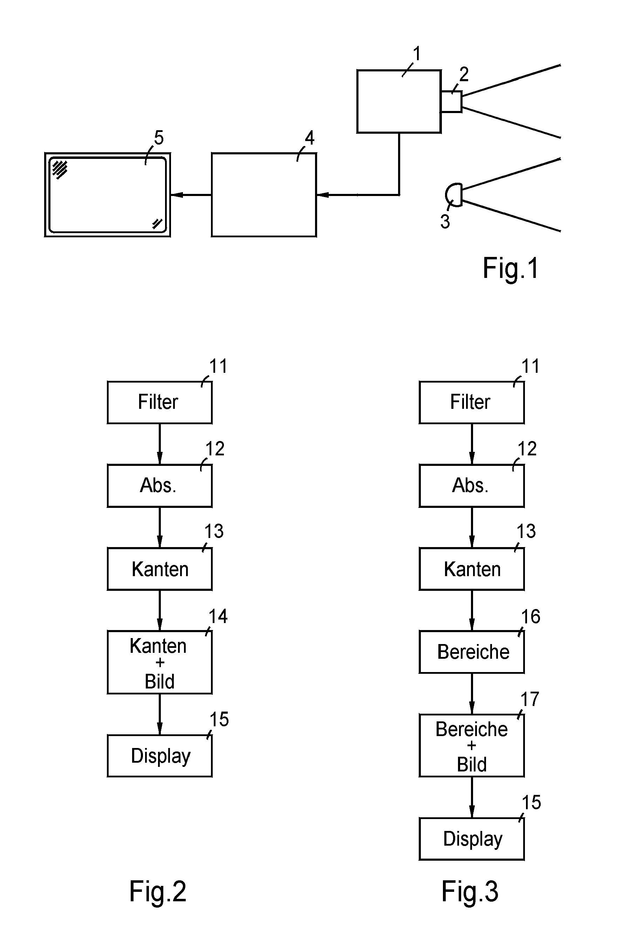

Bei dem Nachtsichtgerät nach Fig. 1 ist eine Videokamera 1 mit einem Objektiv 2 und ein Infrarotscheinwerfer 3 vorgesehen. Die Ausgangssignale der Videokamera 1 werden einem Mikrocomputer 4 zugeführt, der unter anderem Programme zur Bildverarbeitung aufweist. Die Ausgangsdaten der Bildverarbeitung werden zu einem Display 5 übertragen.

Bei dem ersten Ausführungsbeispiel für eine Bildverarbeitung nach Fig. 2 werden die Ausgangssignale der Videokamera 1 (Fig. 1) zunächst einem Kantenfilter 11 zugeleitet. Derartige Filter sind beispielsweise unter den Namen Sobel oder Canny bekannt geworden. In diesem Filter werden in x- und y-Richtung Gradienten ermittelt, mit denen Kantenbereiche erkannt werden. Hierzu können entweder nach Berechnung der Absolutbeträge der Gradienten bei 12 lokale Maxima und Minima bei 13 identifiziert werden. Eine andere Möglichkeit ist die Berechnung der 2. Ableitung bei 12 und Erkennung von Nulldurchgängen bei 13. Diese lokalen Extrema bzw. Nulldurchgänge sind Bildbereiche, die Kanten darstellen. Diese Bildbereiche werden bei 14 in das von der Videokamera aufgenommene Bild eingeblendet. Bei 15 werden Daten, die das verarbeitete Bild darstellen, an das Display 5 (Fig. 1) ausgegeben.

Bei dem in Fig. 3 dargestellten Ausführungsbeispiel erfolgen die Kantenfilterung, die Berechnung der Absolutbeträge der Gradienten sowie die Erkennung der Bildbereiche mit hohen Gradienten (Kanten) wie bei dem Ausführungsbeispiel nach Fig. 2. Im Schritt 16 werden jedoch die von den bei 13 ermittelten Kanten umschlossenen Bildbereiche berechnet. Hierbei kann z.B. eine Closing-Operation durchgeführt werden, um eventuell nicht ganz umschlossene Objektumrandungen zu schließen. Diese Bildbereiche werden bei 17 durch Erhöhung der Helligkeit oder durch Hinzufügung von Mustern zu dem von der Videokamera aufgenommenen Bild hervorgehoben. Bei 15 werden die das derart bearbeitete Bild darstellenden Daten dem Display zugeführt.

## Patentansprüche

1. Nachtsichtgerät für ein Kraftfahrzeug mit einer infrarotempfindlichen Videokamera und einem Bildwiedergabegerät, **dadurch gekennzeichnet, dass** in dem Signalweg zwischen der Videokamera (1) und dem Bildwiedergabegerät (5) eine Bildverarbeitungseinrichtung (4) zur Detektion von Kanten angeordnet ist.

2. Nachtsichtgerät nach Anspruch 1, **dadurch gekennzeichnet, dass** die Bildverarbeitungseinrichtung (4) ferner zur Hervorhebung der detektierten Kanten im wiedergegebenen Bild ausgebildet ist.

3. Nachtsichtgerät nach einem der vorhergehenden Ansprüche, **dadurch gekennzeichnet, dass** die Bildverarbeitungseinrichtung (4) ferner zur Hervorhebung der von den detektierten Kanten umgebenen Objekte im wiedergegebenen Bild ausgebildet ist.

4. Nachtsichtgerät nach einem der vorhergehenden Ansprüche, **dadurch gekennzeichnet, dass** die Bildverarbeitungseinrichtung (4) in einem Mikrocomputer durch geeignete Programme gebildet ist.

5. Nachtsichtgerät nach einem der vorhergehenden Ansprüche, **dadurch gekennzeichnet, dass** das Nachtsichtgerät eine Infrarot-Beleuchtungseinrichtung umfasst.
